# DEMANDE DE BREVET EUROPEEN

(11) **EP 4 686 600 A1**
(43) Date de publication de la demande: **04.02.2026**
(21) Numéro de dépôt: 25187021.8
(22) Date de dépôt: 02.07.2025
(51) Int. Cl.: B60L 15/20, B60K 6/52

(54) **SURVEILLANCE DES BONDS EN AVANT D'UN VÉHICULE TERRESTRE À MACHINES MOTRICES ÉLECTRIQUES ASSOCIÉES À DES TRAINS DIFFÉRENTS**

(30) Priorité: 01.08.2024 FR 2408540
(71) Demandeur: Stellantis Auto SAS, 78300 Poissy (FR)
(72) Inventeur: BALENGHIEN, OLIVIER, 93390 CLICHY SOUS BOIS (FR); BOUDART, SAMUEL, 78480 VERNEUIL SUR SEINE (FR); TEUMA, BRUNO, 75018 PARIS (FR)
(74) Mandataire: PSIP

(57) **Abrégé**

Un procédé de surveillance est implémenté dans un véhicule terrestre et comprenant des première et seconde machines motrices électriques délivrant des premier et second couples moteurs pour des roues motrices appartenant à des premier et second trains. Ce procédé comprend une étape (10-50) dans laquelle on détermine la différence entre une somme de premier et second couples aux roues, déterminés en fonction des premier et second couples moteurs délivrés, et une consigne de couple total à fournir aux roues motrices, puis, lorsqu'une valeur fonction de cette différence déterminée ne satisfait pas à un critère de bond en avant choisi, on interdit le fonctionnement de l'une des première et seconde machines motrices électriques et on impose un fonctionnement dans un mode dégradé de l'autre de ces première et seconde machines motrices électriques.

## Description

### Domaine technique de l'invention

L'invention concerne les véhicules terrestres comprenant deux machines motrices électriques et associées respectivement à deux trains de roues motrices indépendants, et plus précisément la surveillance dans de tels véhicules de leurs bonds en avant.

On entend ici par « bond en avant » un phénomène conduisant un véhicule à effectuer un déplacement, vers l'avant ou l'arrière, supérieur à une distance prédéfinie (typiquement 50 cm) en moins d'une durée prédéfinie (typiquement 1,4 secondes) en raison d'un couple total au niveau des roues motrices non souhaité par le conducteur et donc non proportionnel à l'enfoncement de la pédale d'accélération.

### Etat de la technique

Certains véhicules terrestres (et par exemple de type automobile), comprennent un groupe motopropulseur (ou GMP) comportant au moins des première et seconde machines motrices électriques propres, lorsqu'elles sont alimentées en courant électrique par une source d'alimentation électrique (comme par exemple une batterie de puissance ou une pile à combustible), à délivrer respectivement des premier et second couples moteurs pour entraîner en rotation des roues motrices appartenant respectivement à des premier et second trains indépendants.

Ce type de véhicule (à deux trains moteurs indépendants) peut fonctionner, notamment, dans un mode quatre roues motrices (ou AWD (« All Wheels Drive ») - transmission intégrale) lorsque ses première et seconde machines motrices électriques fournissent simultanément des couples moteurs.

Dans les véhicules présentés ci-avant, il peut arriver que dans une fin de manœuvre le couple total au niveau des roues motrices soit strictement supérieur à ce que souhaite le conducteur et donc ne soit pas proportionnel à l'enfoncement de la pédale d'accélération. Dans cette situation de sur-couples combinés au niveau des deux trains moteurs, le véhicule fait un bond en avant suivant sa direction de déplacement en cours, ce qui peut s'avérer dangereux car il peut alors heurter un obstacle (objet ou être vivant).

Ce problème de bond en avant peut résulter d'un niveau de précision insuffisant des deux capteurs mesurant les régimes respectifs des rotors des première et seconde machines motrices électriques, à partir desquels sont déterminés les premier et second couples moteurs délivrés, et/ou des fonctionnements pas suffisamment précis des première et seconde machines motrices électriques. Afin d'y remédier, on pourrait utiliser des capteurs de régime plus précis et/ou des première et seconde machines motrices électriques ayant des fonctionnements plus précis, mais cela serait assez onéreux et donc augmenterait sensiblement le coût des véhicules concernés.

L'invention a donc notamment pour but d'améliorer la situation.

### Présentation de l'invention

Elle propose notamment à cet effet un procédé de surveillance destiné à être mis en œuvre dans un véhicule terrestre et comprenant des première et seconde machines motrices électriques propres à délivrer respectivement des premier et second couples moteurs pour entraîner en rotation des roues motrices appartenant respectivement à des premier et second trains.

Ce procédé de surveillance se caractérise par le fait qu'il comprend une étape dans laquelle on détermine une différence entre une somme de premier et second couples aux roues, déterminés respectivement en fonction des premier et second couples moteurs délivrés, et une consigne de couple total à fournir aux roues motrices, puis, lorsqu'une valeur fonction de cette différence déterminée ne satisfait pas à un critère de bond en avant choisi, on interdit le fonctionnement de l'une des première et seconde machines motrices électriques et on impose un fonctionnement dans un mode dégradé de l'autre de ces première et seconde machines motrices électriques.

Grâce à l'invention, on peut désormais éviter la survenue d'un bond en avant, sans avoir besoin d'utiliser des capteurs de régime plus précis et/ou des première et seconde machines motrices électriques ayant des fonctionnements plus précis, ce qui permet d'éviter non seulement que le véhicule heurte un obstacle, mais aussi d'augmenter sensiblement le coût du véhicule.

Le procédé de surveillance selon l'invention peut comporter d'autres caractéristiques qui peuvent être prises séparément ou en combinaison, et notamment :
- dans son étape, le critère de bond en avant peut être choisi en fonction d'une durée pendant laquelle la différence déterminée a dépassé un premier seuil choisi ;
- en présence de la première option, dans son étape, le critère de bond en avant peut être un point, défini par la différence déterminée et la durée pendant laquelle cette différence déterminée a dépassé le premier seuil, situé en-dessous d'une courbe d'évolution d'une différence de couple en fonction d'une durée de dépassement de seuil ;
- également en présence de la première option, dans son étape, le premier seuil choisi peut être compris entre 0 N.m et 5 N.m;
- dans son étape le mode dégradé peut consister à délivrer un couple moteur qui est propre à provoquer un déplacement du véhicule à une vitesse inférieure à un second seuil choisi ;
- en présence de la dernière option, dans son étape, le second seuil choisi peut être compris entre 10 km/h et 20 km/h ;
- dans son étape on peut aussi effectuer dans le véhicule au moins une action choisie parmi une alerte d'un conducteur du véhicule au moyen d'un voyant de ce dernier et/ou d'un message textuel et/ou d'un message sonore indiquant un besoin de vérification du véhicule, et un enregistrement d'au moins un code défaut représentatif d'un problème de bond en avant du véhicule.

L'invention propose également un produit programme d'ordinateur comprenant un jeu d'instructions qui, lorsqu'il est exécuté par des moyens de traitement, est propre à mettre en œuvre un procédé de surveillance du type de celui présenté ci-avant, dans un véhicule terrestre et comprenant des première et seconde machines motrices électriques propres à délivrer respectivement des premier et second couples moteurs pour entraîner en rotation des roues motrices appartenant respectivement à des premier et second trains, pour surveiller des bonds en avant du véhicule.

L'invention propose également un dispositif de surveillance destiné à équiper un véhicule terrestre et comprenant des première et seconde machines motrices électriques propres à délivrer respectivement des premier et second couples moteurs pour entraîner en rotation des roues motrices appartenant respectivement à des premier et second trains.

Ce dispositif de surveillance se caractérise par le fait qu'il comprend au moins un processeur et au moins une mémoire agencés pour effectuer les opérations consistant à déterminer une différence entre une somme de premier et second couples aux roues, déterminés respectivement en fonction des premier et second couples moteurs délivrés, et une consigne de couple total à fournir aux roues motrices, puis, lorsqu'une valeur fonction de cette différence déterminée ne satisfait pas à un critère de bond en avant choisi, à déclencher une interdiction de fonctionnement de l'une des première et seconde machines motrices électriques et une imposition de fonctionnement dans un mode dégradé de l'autre de ces première et seconde machines motrices électriques.

L'invention propose également un véhicule terrestre, éventuellement de type automobile, et comprenant, d'une part, des première et seconde machines motrices électriques propres à délivrer respectivement des premier et second couples moteurs pour entraîner en rotation des roues motrices appartenant respectivement à des premier et second trains, et, d'autre part, un dispositif de surveillance du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un exemple de réalisation d'un véhicule terrestre comprenant un dispositif de surveillance selon l'invention et un GMP associé à un calculateur de supervision et comprenant des première et seconde machines motrices électriques et associées respectivement à des premier et second capteurs de régime,
[Fig. 2] illustre schématiquement et fonctionnellement un exemple de réalisation d'un calculateur de supervision comprenant un exemple de réalisation d'un dispositif de surveillance selon l'invention, et
[Fig. 3] illustre schématiquement un exemple d'algorithme mettant en œuvre un procédé de surveillance selon l'invention.

### Description détaillée de l'invention

L'invention a notamment pour but de proposer un procédé de surveillance, et un dispositif de surveillance DS associé, destinés à permettre une surveillance des bonds en avant d'un véhicule V terrestre et à groupe motopropulseur (ou GMP) comprenant des première MM1 et seconde MM2 machines motrices électriques associées à deux trains moteurs T1 et T2 indépendants.

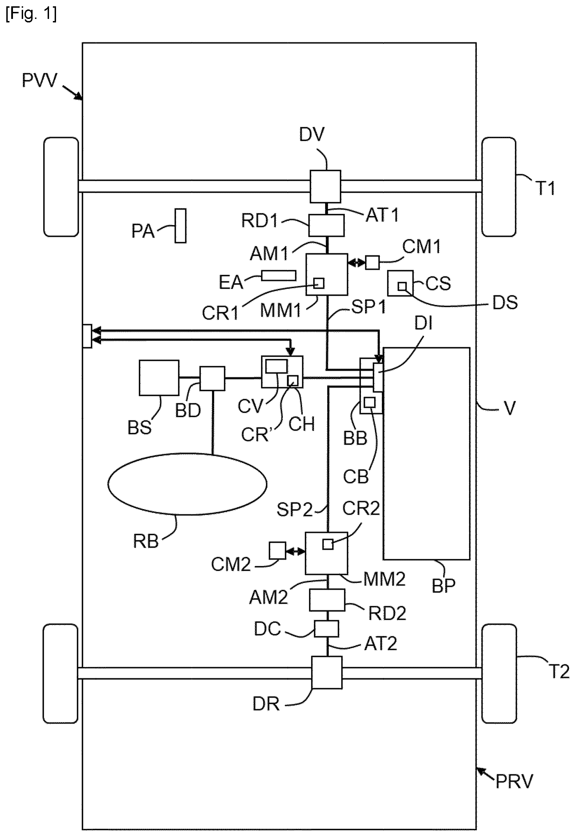

Dans ce qui suit, on considère, à titre d'exemple non limitatif, que le véhicule V terrestre est de type automobile. Il s'agit par exemple d'une voiture, comme illustré sur la figure 1. Mais l'invention n'est pas limitée à ce type de véhicule terrestre. Elle concerne en effet tout type de véhicule terrestre comprenant un groupe motopropulseur (ou GMP) comportant au moins des première et seconde machines motrices électriques et associées respectivement à des premier et second trains moteurs indépendants.

Par ailleurs, on considère dans ce qui suit, à titre d'exemple non limitatif, que les première MM1 et seconde MM2 machines motrices électriques sont alimentées en énergie électrique par une source d'alimentation électrique BP constituant une batterie de puissance (ou « principale » ou encore « de traction »), rechargeable (au moins pendant des phases de recharge). Mais les première MM1 et seconde MM2 machines motrices électriques pourraient être alimentées en énergie électrique par une pile à combustible.

On a schématiquement représenté sur la figure 1 un véhicule (terrestre) V comprenant une chaîne de transmission à GMP purement électrique (et donc comportant des première MM1 et seconde MM2 machines motrices électriques), un réseau de bord RB, une batterie de servitude BS, une source d'alimentation électrique (ici une batterie de puissance (ou principale ou encore de traction)) BP, un convertisseur CV, un calculateur de supervision CS, des premier CM1 et second CM2 calculateurs de machine, un dispositif de surveillance DS selon l'invention , et un réseau électrique de puissance SP1 et SP2.

Le convertisseur CV est de type DC/DC (« Direct Current/Direct Current » (courant continu/courant continu)). Il est donc chargé de convertir un courant continu d'une première tension vers une seconde tension.

Le réseau de bord RB est un réseau d'alimentation électrique auquel sont couplés des équipements (ou organes) électriques (ou électroniques) qui consomment de l'énergie électrique.

La batterie de servitude BS est chargée de fournir de l'énergie électrique au réseau de bord RB, en complément, ici, de celle fournie par le convertisseur CV alimenté par la source d'alimentation électrique BP via le réseau électrique de puissance SP1 et SP2, et parfois à la place, ici, de ce convertisseur CV. Par exemple, cette batterie de servitude BS peut être agencée sous la forme d'une batterie de type très basse tension (typiquement 12 V, 24 V ou 48 V). Elle est rechargeable au moins par le convertisseur (de courant) CV. On considère dans ce qui suit, à titre d'exemple non limitatif, que la batterie de servitude BS est de type Lithium-ion 12 V.

La chaîne de transmission a un GMP qui comprend, notamment, des première MM1 et seconde MM2 machines motrices (électriques), des premier AM1 et second AM2 arbres moteurs, et des premier AT1 et second AT2 arbres de transmission. On entend ici par « machine motrice électrique » une machine électrique agencée de manière à fournir (ou délivrer) un couple moteur cmj (j = 1 ou 2), défini par une consigne de couple cgj, pour déplacer le véhicule V lorsqu'elle est alimentée en énergie électrique par la source d'alimentation électrique BP (on parle alors de fourniture d'un couple de sortie positif), ainsi qu'éventuellement à récupérer du couple, par exemple dans une phase de freinage récupératif (on parle alors de fourniture d'un couple de sortie négatif).

Le fonctionnement du GMP est supervisé par un calculateur de supervision CS. Le contrôle de la première machine motrice MM1 est assuré par un premier calculateur de machine CM1 associé, notamment en fonction d'une première consigne cg1 (j = 1) fournie par le calculateur de supervision CS et définissant le premier couple moteur cm1 (j = 1) que ce dernier (CS) veut que la première machine motrice MM1 fournisse (ou délivre). Le contrôle de la seconde machine motrice MM2 est assuré par un second calculateur de machine CM2 associé, notamment en fonction d'une seconde consigne cg2 (j = 2) fournie par le calculateur de supervision CS et définissant le second couple moteur cm2 (j = 2) que ce dernier (CS) veut que la seconde machine motrice MM2 fournisse (ou délivre).

La première machine motrice MM1 est couplée au premier arbre moteur AM1, pour lui fournir un premier couple moteur cm1 (défini par la première consigne cg1) par entraînement en rotation lorsqu'il est alimenté en énergie électrique par la source d'alimentation électrique BP via une première sous-partie SP1 du réseau électrique de puissance. Ce premier arbre moteur AM1 est ici couplé à un premier réducteur RD1 qui est aussi couplé au premier arbre de transmission AT1, lui-même couplé à un premier train T1 de roues motrices, de préférence via un premier différentiel DV.

Par ailleurs, la première machine motrice MM1 est couplée à la première sous-partie SP1 du réseau électrique de puissance et fait l'objet au niveau de son rotor de mesures d'un premier régime rm1 par un premier capteur de régime CR1.

On notera que le premier train (moteur) T1 est ici situé dans la partie avant PVV du véhicule V. Mais dans une variante ce premier train T1 pourrait être le second train (moteur) T2 qui est situé dans la partie arrière PRV du véhicule V.

La seconde machine motrice MM2 est couplée au second arbre moteur AM2, pour lui fournir un second couple moteur cm2 (défini par la seconde consigne cg2) par entraînement en rotation lorsqu'il est alimenté en énergie électrique par la source d'alimentation électrique BP via une seconde sous-partie SP2 du réseau électrique de puissance. Ce second arbre moteur AM2 est ici couplé à un second réducteur RD2 qui est aussi couplé, via à un dispositif de couplage DC, au second arbre de transmission AT2, lui-même couplé au second train T2 de roues motrices, de préférence via un second différentiel DR.

Par ailleurs, la seconde machine motrice MM2 est couplée à la seconde sous-partie SP2 du réseau électrique de puissance et fait l'objet au niveau de son rotor de mesures d'un second régime rm2 par un second capteur de régime CR2.

On notera que lorsque le premier train (moteur) T1 est situé dans la partie arrière PRV du véhicule V, le second train (moteur) T2 est situé dans la partie avant PVV du véhicule V.

Le dispositif de couplage DC est agencé de manière à coupler ou découpler la seconde machine motrice MM2 du second arbre de transmission AT2, selon les besoins définis par le calculateur de supervision CS. Par exemple, ce dispositif de couplage DC peut être un embrayage (éventuellement hydraulique). Mais il pourrait aussi s'agir d'un crabot, par exemple.

Comme le sait l'homme de l'art, la détermination du couple moteur cmj fourni sur sa sortie par une machine motrice électrique MMj (j = 1 ou 2) peut se faire au moyen de l'équation cmj = (mtj * ismj * µj) / rmj. µj est un coefficient de rendement de la machine motrice électrique MMj qui est déterminé grâce au régime rmj du rotor de la machine motrice électrique MMj (déterminé par le capteur de régime CRj), de la mesure de tension mtj aux bornes d'entrée de la machine motrice électrique MMj, et du courant ismj mesuré en sortie de la machine motrice électrique MMj (ainsi qu'éventuellement de la température interne du stator de la machine motrice électrique MMj).

L'équation précédente découle du fait que la puissance électrique pelecj reçue par la machine motrice électrique MMj sur ses bornes d'entrée est égale au produit (mtj * ismj), et que la machine motrice électrique MMj fournit en sortie une puissance mécanique pmecaj qui est égale au produit (cmj * rmj) mais aussi au produit (pelecj * µj), et que par conséquent on a l'équation (cmj * rmj) = (mtj * ismj * µj).

Par exemple, la détermination du couple moteur cmj fourni sur la sortie d'une machine motrice électrique MMj peut être réalisée périodiquement par le calculateur de machine CMj qui contrôle cette machine motrice électrique MMj.

La source d'alimentation électrique BP est couplée au réseau électrique de puissance via un dispositif d'interface DI. Ce dispositif d'interface (ou d'isolement) DI est agencé de manière à isoler en cas de besoin la source d'alimentation électrique BP (ici) d'au moins la première MM1 ou seconde MM2 machine motrice et plus généralement de chaque sous-partie SP1, SP2 du réseau électrique de puissance. Il comprend par exemple des contacteurs (ou interrupteurs), éventuellement à base de MOSFET(s), qui peuvent être placés chacun dans un état ouvert (ou non passant) ou un état fermé (ou passant).

Comme illustré non limitativement sur la figure 1, le dispositif d'interface DI peut faire partie d'un boîtier de source BB associé à la source d'alimentation électrique BP et qui comprend aussi des moyens de mesure de tension/courant (non illustrés) et un calculateur de source CB. La source d'alimentation électrique BP et le boîtier de source BB peuvent constituer un ensemble (ou « pack ») de source.

La source d'alimentation électrique BP est ici une batterie de puissance (ou principale ou encore de traction) qui peut, par exemple, comprendre des cellules de stockage d'énergie électrique, éventuellement électrochimiques (par exemple de type lithium-ion (ou Li-ion) ou Ni-Mh ou Ni-Cd). Egalement par exemple, la source d'alimentation électrique BP peut être de type basse tension (typiquement 450 V à titre illustratif). Mais elle pourrait être de type moyenne tension ou haute tension.

Le convertisseur CV est aussi chargé, ici, pendant les phases de roulage du véhicule V de convertir une partie du courant électrique stocké dans la source d'alimentation électrique BP pour alimenter en courant électrique converti le réseau de bord RB et la batterie de servitude BS (pour la recharger).

On notera, comme illustré non limitativement sur la figure 1, que le convertisseur CV peut faire partie d'un chargeur CH comprenant aussi un calculateur de recharge CR' chargé, au moins, de contrôler les recharges de la source d'alimentation électrique BP.

On notera également que dans l'exemple illustré non limitativement sur la figure 1 le véhicule V comprend aussi un boîtier de distribution BD auquel sont couplés la batterie de servitude BS, le convertisseur CV et le réseau de bord RB. Ce boîtier de distribution BD est chargé de distribuer dans le réseau de bord RB l'énergie électrique stockée dans la batterie de servitude BS ou produite par le convertisseur CV, pour l'alimentation des organes (ou équipements) électriques couplés au réseau de bord RB en fonction de demandes d'alimentation reçues (notamment du calculateur de supervision CS du GMP).

Comme évoqué plus haut, l'invention propose notamment un procédé de surveillance destiné à permettre la surveillance des bonds en avant du véhicule V.

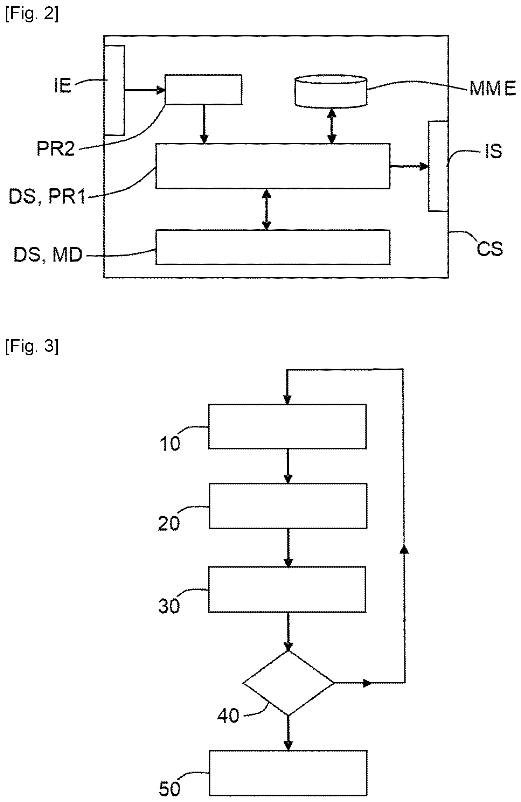

Ce procédé (de surveillance) peut être mis en œuvre au moins partiellement par le dispositif de surveillance DS (illustré au moins partiellement sur les figures 1 et 2) qui comprend à cet effet au moins un processeur PR1, par exemple de signal numérique (ou DSP (« Digital Signal Processor »)), et au moins une mémoire MD. Ce dispositif de surveillance DS peut donc être réalisé sous la forme d'une combinaison de circuits ou composants électriques ou électroniques (ou « hardware ») et de modules logiciels (ou « software »). A titre d'exemple, il peut s'agir d'un microcontrôleur.

La mémoire MD est vive afin de stocker des instructions pour la mise en œuvre par le processeur PR1 d'une partie au moins du procédé de surveillance. Le processeur PR1 peut comprendre des circuits intégrés (ou imprimés), ou bien plusieurs circuits intégrés (ou imprimés) reliés par des connexions filaires ou non filaires. On entend par circuit intégré (ou imprimé) tout type de dispositif apte à effectuer au moins une opération électrique ou électronique.

Dans l'exemple illustré non limitativement sur les figures 1 et 2, le dispositif de surveillance DS fait partie du calculateur de supervision CS. Mais cela n'est pas obligatoire. En effet, le dispositif de surveillance DS pourrait comprendre son propre calculateur dédié, ou bien pourrait faire partie d'un autre calculateur embarqué dans le véhicule V et assurant au moins une autre fonction.

Comme illustré non limitativement sur la figure 3, le procédé (de surveillance), selon l'invention, comprend une étape 10-50 qui est mise en œuvre chaque fois que les première MM1 et seconde MM2 machines motrices fonctionnent simultanément pour fournir un couple moteur total cmt égal à la somme des premier cm1 et second cm2 couples moteurs (soit cmt = cm1 + cm2).

Ces premier cm1 et second cm2 couples moteurs sont définis respectivement par les première cg1 et seconde cg2 consignes dont la somme est égale à une consigne de couple total cgt (soit cgt = cg1 + cg2), par exemple déterminée par le calculateur de supervision CS. Cette consigne de couple total cgt est représentative de la volonté du conducteur du véhicule V en matière de couple moteur, laquelle est, par exemple, définie par le pourcentage d'enfoncement de la pédale d'accélérateur PA.

L'étape 10-50 du procédé comprend une sous-étape 20 dans laquelle on (par exemple le dispositif de surveillance DS) détermine la différence df entre la somme sc des premier cr1 et second cr2 couples aux roues, déterminés respectivement en fonction des premier cm1 et second cm2 couples moteurs délivrés, et la consigne de couple total cgt à fournir aux roues motrices des premier T1 et second T2 trains, soit df = sc - cgt = (cr1 + cr2) - (cg1 + cg2).

Par exemple, chaque couple aux roues crj peut être déterminé en multipliant le couple moteur déterminé cmj par le facteur de démultiplication fdj du réducteur concerné RDj, soit crj = cmj*fdj. Egalement par exemple, la détermination de chaque couple aux roues crj peut être réalisée périodiquement par le dispositif de surveillance DS dans une sous-étape 10 de l'étape 10-50 (voir figure 3). Mais elle pourrait aussi être réalisée par le calculateur de supervision CS, par exemple.

L'étape 10-50 du procédé comprend aussi une sous-étape 50 dans laquelle, lorsqu'une valeur v1 fonction de la différence déterminée df ne satisfait pas à un critère de bond en avant choisi, on interdit le (par exemple le dispositif de surveillance DS déclenche une interdiction du) fonctionnement de l'une des première MM1 et seconde MM2 machines motrices électriques, et on impose un (par exemple le dispositif de surveillance DS déclenche une imposition de) fonctionnement dans un mode dégradé de l'autre de ces première MM1 et seconde MM2 machines motrices électriques.

Par exemple, on peut interdire le fonctionnement de la seconde machine motrice électrique MM2 et imposer le fonctionnement de la première machine motrice électrique MM1 dans le mode dégradé.

Grâce à cette détection de la non satisfaction du critère de bond en avant (représentative d'une possible survenue d'un bond en avant), on peut éviter la survenue de ce bond en avant, sans avoir besoin d'utiliser des capteurs de régime CR1 et CR2 plus précis et/ou des première MM1 et seconde MM2 machines motrices électriques ayant des fonctionnements plus précis. Cela permet d'éviter non seulement que le véhicule V heurte un obstacle (objet ou être vivant), mais aussi d'augmenter sensiblement le coût du véhicule V.

Par exemple, dans la sous-étape 50 de l'étape 10-50 le mode dégradé peut consister à délivrer un couple moteur cmj (ici cm1) qui est propre à provoquer un déplacement du véhicule V à une vitesse inférieure à un (second) seuil s2 choisi. Un tel mode dégradé est parfois appelé en anglais « limp home ».

Egalement par exemple, le second seuil s2 choisi peut être compris entre 10 km/h et 20 km/h. A titre d'exemple illustratif, ce second seuil s2 peut être égal à 17 km/h. Mais d'autres valeurs de second seuil s2 peuvent être utilisées. Par exemple, ce second seuil s2 peut être choisi pendant la phase de mise au point ou d'essai d'un véhicule similaire au véhicule V.

Egalement par exemple, dans la sous-étape 50 de l'étape 10-50, on peut interdire le (par exemple le dispositif de surveillance DS peut déclencher l'interdiction du) fonctionnement de la première MM1 ou seconde MM2 machine motrice électrique en cessant de transmettre la première consigne de couple cg1 pour la première machine motrice électrique MM1 ou la seconde consigne de couple cg2 pour la seconde machine motrice électrique MM2. Cette cession de transmission de la première cg1 ou seconde cg2 consigne de couple peut être réalisée par le calculateur de supervision CS, et elle est immédiatement interprétée par le premier CM1 ou second CM2 calculateur de machine comme une interdiction de consommation de premier ou second courant de la source d'alimentation électrique BP par la première MM1 ou seconde MM2 machine motrice électrique.

Mais dans une variante de réalisation l'interdiction de fonctionnement de la première MM1 ou seconde MM2 machine motrice électrique peut résulter du découplage de la source d'alimentation électrique BP de la première SP1 ou seconde SP2 sous-partie du réseau électrique de puissance au niveau du dispositif d'interface (ou d'isolement) DI, par exemple par action sur certains au moins de ses contacteurs (ou interrupteurs), sous le contrôle du calculateur de source CB.

Egalement par exemple, dans l'étape 10-50 le critère de bond en avant peut être choisi en fonction de la durée dds pendant laquelle la différence déterminée df a dépassé un premier seuil s1 choisi.

Dans ce cas, dans l'étape 10-50 le critère de bond en avant peut être un point p(df, dds), défini par la différence déterminée df et la durée dds pendant laquelle cette différence déterminée df a dépassé le premier seuil s1, situé en-dessous d'une courbe d'évolution d'une différence de couple en fonction d'une durée de dépassement de seuil. On comprendra que le critère de bond en avant n'est alors pas satisfait (et donc qu'il y a un risque de bond en avant) lorsque le point p(df, dds) se retrouve placé au-dessus de la courbe d'évolution précitée. Inversement, le critère de bond en avant est satisfait (et donc il n'y a pas de risque de bond en avant) lorsque le point p(df, dds) se retrouve placé en-dessous de (ou sur) la courbe d'évolution précitée.

La définition de cette courbe d'évolution peut, par exemple, être stockée dans une mémoire du dispositif de surveillance DS. Par ailleurs, cette courbe d'évolution peut, par exemple, être déterminée pendant la phase de mise au point ou d'essai d'un véhicule similaire au véhicule V.

On notera que la courbe d'évolution peut résulter du raisonnement suivant, fondé sur le fait que l'on ne veut pas que le véhicule V effectue soudainement un déplacement, vers l'avant ou l'arrière, supérieur à une distance prédéfinie dp1 (typiquement 50 cm) en moins d'une durée prédéfinie dp2 (typiquement 1,4 secondes) en raison d'un couple total au niveau de ses roues motrices non souhaité par le conducteur et donc non proportionnel à l'enfoncement de la pédale d'accélération PA.

On peut donc déterminer, pour une inertie donnée iv du véhicule V, une courbe d'évolution du couple total aux roues motrices crt en fonction du temps de sur-couple aux roues motrices pour éviter un déplacement supérieur à la distance prédéfinie dp1.

Pour ce faire, on commence par déterminer la force de déplacement du véhicule V fdv qui est égale à l'inertie du véhicule V iv multipliée par l'accélération du véhicule V av, soit fdv = iv*av. Cette force de déplacement du véhicule V fdv étant aussi égale au couple total aux roues crt multiplié par le régime de rotation des roues rrr (soit fdv = crt*rrr), on a donc la relation iv*av = crt*rrr, de laquelle on déduit que le couple total aux roues crt est égal à (iv*av)/rrr.

Egalement par exemple, le premier seuil s1 choisi peut être compris entre 0 N.m et 5 N.m. A titre d'exemple illustratif, ce premier seuil s1 peut être égal à 0 N.m. Mais d'autres valeurs de premier seuil s1 peuvent être utilisées. Par exemple, ce premier seuil s1 peut être choisi pendant la phase de mise au point ou d'essai d'un véhicule similaire au véhicule V.

Egalement par exemple, et comme illustré non limitativement sur la figure 3, l'étape 10-50 du procédé peut aussi comprendre une sous-étape 30 dans laquelle on détermine la valeur v1 en fonction de la différence déterminée df. A cet effet, on (par exemple le dispositif de surveillance DS) peut, par exemple, utiliser des premier cp1 et second cp2 compteurs.

Le premier compteur cp1 est un compteur de somme des sur-couples (ou différences déterminées df positives). Le second compteur cp2 est un compteur de durée de la différence déterminée df positive. Ils sont par exemple initialisés à zéro (0) lors de la mise du contact du véhicule V par le conducteur, et ils sont incrémentés après chaque détermination de la différence df, par exemple de la façon suivante.

Si la nouvelle différence déterminée df est supérieure au premier seuil s1 (par exemple égal à 0 N.m), et si la valeur en cours du second compteur cp2 est inférieure à la durée prédéfinie dp2 (par exemple égale à 1,4 secondes), la nouvelle valeur du premier compteur cp1 devient égale à la somme de son ancienne valeur en cours et de cette nouvelle différence déterminée df, et la nouvelle valeur du second compteur cp2 devient égale à la somme de son ancienne valeur en cours et de la période de rafraichissement de la durée dds (par exemple égale à 100 millisecondes). En d'autres termes, si df > 0 et cp2(t) ≤ 1,4 s, alors cp1(t+1) = cp1 (t) + df = v1 et cp2(t+1) = cp2(t) + 100 ms.

Une fois cette mise à jour des premier cp1 et second cp2 compteurs réalisée, comme illustré non limitativement sur la figure 3 l'étape 10-50 du procédé peut comprendre une sous-étape 40 dans laquelle on (par exemple le dispositif de surveillance DS) peut déterminer si la nouvelle valeur du premier compteur cp1, qui est égale à la valeur v1, est située en-dessous de la courbe d'évolution présentée plus haut.

Dans la négative, cela signifie que le critère de bond en avant n'est pas satisfait, et donc qu'il y a un potentiel problème de bond en avant. Par conséquent, on (par exemple le dispositif de surveillance DS) effectue la sous-étape 50.

En revanche, dans l'affirmative, cela signifie que le critère de bond en avant est satisfait, et donc qu'il n'y a pas de problème de bond en avant. Par conséquent, on (par exemple le dispositif de surveillance DS) effectue de nouveau la sous-étape 10 avec des valeurs rafraichies.

On notera que lorsque l'on a df ≤ 0, alors cp1(t+1) = 0 et cp2(t+1) = 0 (réinitialisation à zéro (0) des premier cp1 et second cp2 compteurs). De même, lorsque l'on a cp2(t) > 1,4 s, alors cp1(t+1) = 0 et cp2(t+1) = 0 (réinitialisation à zéro (0) des premier cp1 et second cp2 compteurs).

Egalement par exemple, dans la sous-étape 50 de l'étape 10-50 on peut aussi effectuer (par exemple le dispositif de surveillance DS peut aussi déclencher la réalisation) dans le véhicule V au (d'au) moins une action qui est choisie parmi :
- une alerte du conducteur du véhicule V au moyen d'un voyant de ce dernier (V) et/ou d'un message textuel et/ou d'un message sonore indiquant un besoin de vérification du véhicule V dans un service après-vente, et
- un enregistrement d'au moins un code défaut représentatif d'un problème de bond en avant du véhicule V.

Par exemple, en cas d'alerte du conducteur le voyant peut faire partie du tableau de bord ou être affiché sur un écran d'affichage EA du véhicule V (éventuellement celui du combiné central installé sur ou dans la planche de bord). Il peut s'agir d'un voyant dédié au problème de bond en avant ou d'un voyant de service (non dédié).

Egalement par exemple, en cas d'alerte du conducteur le message d'alerte textuel peut être affiché sur au moins un écran EA du véhicule V (par exemple du tableau de bord ou du combiné central) ou sur l'écran d'un téléphone intelligent (ou « smartphone ») du conducteur.

Egalement par exemple, en cas d'alerte du conducteur le message d'alerte sonore (ou audio) peut être diffusé par au moins un haut-parleur du véhicule V ou du téléphone intelligent précité.

On notera que le stockage du (de chaque) code défaut peut, par exemple, se faire dans une mémoire (éventuellement morte) du dispositif de surveillance DS ou du calculateur de supervision CS. Cela permet de signaler au service après-vente qui révisera le véhicule V qu'un problème de bond en avant a été détecté, et ainsi de faciliter la recherche de l'origine de ce problème par ce service après-vente.

On notera également que lorsque le véhicule V est remis en fonctionnement après une interdiction de fonctionnement de la première MM1 ou seconde MM2 machine motrice électrique et une imposition de fonctionnement dans le mode dégradé de la seconde MM2 ou première MM1 machine motrice électrique, on (par exemple le dispositif de surveillance DS) peut de nouveau autoriser les fonctionnements « normaux » (sans restriction) des première MM1 et seconde MM2 machines motrices électriques si la valeur v1 satisfait de nouveau au critère de bond en avant. En revanche, si la valeur v1 ne satisfait toujours pas au critère de bond en avant, l'interdiction de fonctionnement de la première MM1 ou seconde MM2 machine motrice électrique et l'imposition de fonctionnement dans le mode dégradé de la seconde MM2 ou première MM1 machine motrice électrique sont maintenus.

On notera également, comme illustré non limitativement sur la figure 2, que le calculateur de supervision CS (ou le calculateur du dispositif de surveillance DS) peut aussi comprendre une mémoire de masse MME, notamment pour stocker la consigne de couple total cgt et les premier cr1 et second cr2 couples aux roues ou les premier cm1 et second cm2 couples moteurs déterminés, ainsi que d'éventuelles données intermédiaires intervenant dans tous ses calculs et traitements. Par ailleurs, ce calculateur de supervision CS (ou le calculateur du dispositif de surveillance DS) peut aussi comprendre une interface d'entrée IE pour la réception d'au moins la consigne de couple total cgt et les premier cr1 et second cr2 couples aux roues ou les premier cm1 et second cm2 couples moteurs déterminés, éventuellement après les avoir mis en forme et/ou démodulés et/ou amplifiés, de façon connue en soi, au moyen d'un processeur de signal numérique PR2. De plus, ce calculateur de supervision CS (ou le calculateur du dispositif de surveillance DS) peut aussi comprendre une interface de sortie IS, notamment pour délivrer chaque message requérant une interdiction de fonctionnement de la première MM1 ou seconde MM2 machine motrice électrique, chaque message d'imposition de fonctionnement dans le mode dégradé de la seconde MM2 ou première MM1 machine motrice électrique, et chaque éventuel message de déclenchement d'une alerte ou de stockage d'un code défaut.

On notera également que l'invention propose aussi un produit programme d'ordinateur (ou programme informatique) comprenant un jeu d'instructions qui, lorsqu'il est exécuté par des moyens de traitement de type circuits électroniques (ou hardware), comme par exemple le processeur PR1, est propre à mettre en œuvre le procédé de surveillance décrit ci-avant pour surveiller les bonds en avant du véhicule V.

## Revendications

1. Procédé de surveillance pour un véhicule (V) terrestre et comprenant des première (MM1) et seconde (MM2) machines motrices électriques propres à délivrer respectivement des premier et second couples moteurs pour entraîner en rotation des roues motrices appartenant respectivement à des premier (T1) et second (T2) trains, **caractérisé en ce qu'**il comprend une étape (10-50) dans laquelle on détermine une différence entre une somme de premier et second couples aux roues, déterminés respectivement en fonction desdits premier et second couples moteurs délivrés, et une consigne de couple total à fournir auxdites roues motrices, puis, lorsqu'une valeur fonction de ladite différence déterminée ne satisfait pas à un critère de bond en avant choisi, on interdit le fonctionnement de l'une desdites première (MM1) et seconde (MM2) machines motrices électriques et on impose un fonctionnement dans un mode dégradé de l'autre desdites première (MM1) et seconde (MM2) machines motrices électriques.

2. Procédé selon la revendication 1, **caractérisé en ce que** dans ladite étape (10-50) ledit critère de bond en avant est choisi en fonction d'une durée pendant laquelle ladite différence déterminée a dépassé un premier seuil choisi.

3. Procédé selon la revendication 2, **caractérisé en ce que** dans ladite étape (10-50) ledit critère de bond en avant est un point, défini par ladite différence déterminée et ladite durée pendant laquelle cette différence déterminée a dépassé ledit premier seuil, situé en-dessous d'une courbe d'évolution d'une différence de couple en fonction d'une durée de dépassement de seuil.

4. Procédé selon la revendication 2 ou 3, **caractérisé en ce que** dans ladite étape (10-50) ledit premier seuil choisi est compris entre 0 N.m et 5 N.m.

5. Procédé selon l'une des revendications 1 à 4, **caractérisé en ce que** dans ladite étape (10-50) ledit mode dégradé consiste à délivrer un couple moteur propre à provoquer un déplacement dudit véhicule (V) à une vitesse inférieure à un second seuil choisi.

6. Procédé selon la revendication 5, **caractérisé en ce que** dans ladite étape (10-50) ledit second seuil choisi est compris entre 10 km/h et 20 km/h.

7. Procédé selon l'une des revendications 1 à 6, **caractérisé en ce que** dans ladite étape (10-50) on effectue aussi dans ledit véhicule (V) au moins une action choisie parmi une alerte d'un conducteur dudit véhicule (V) au moyen d'un voyant de ce dernier (V) et/ou d'un message textuel et/ou d'un message sonore indiquant un besoin de vérification dudit véhicule (V), et un enregistrement d'au moins un code défaut représentatif d'un problème de bond en avant dudit véhicule (V).

8. Produit programme d'ordinateur comprenant un jeu d'instructions qui, lorsqu'il est exécuté par des moyens de traitement, est propre à mettre en œuvre le procédé de surveillance selon l'une des revendications 1 à 7, dans un véhicule (V) terrestre et comprenant des première (MM1) et seconde (MM2) machines motrices électriques propres à délivrer respectivement des premier et second couples moteurs pour entraîner en rotation des roues motrices appartenant respectivement à des premier (T1) et second (T2) trains, pour surveiller des bonds en avant dudit véhicule (V).

9. Dispositif de surveillance (DS) pour un véhicule (V) terrestre et comprenant des première (MM1) et seconde (MM2) machines motrices électriques propres à délivrer respectivement des premier et second couples moteurs pour entraîner en rotation des roues motrices appartenant respectivement à des premier (T1) et second (T2) trains, **caractérisé en ce qu'**il comprend au moins un processeur (PR1) et au moins une mémoire (MD) agencés pour effectuer les opérations consistant à déterminer une différence entre une somme de premier et second couples aux roues, déterminés respectivement en fonction desdits premier et second couples moteurs délivrés, et une consigne de couple total à fournir auxdites roues motrices, puis, lorsqu'une valeur fonction de ladite différence déterminée ne satisfait pas à un critère de bond en avant choisi, à déclencher une interdiction de fonctionnement de l'une desdites première (MM1) et seconde (MM2) machines motrices électriques et une imposition de fonctionnement dans un mode dégradé de l'autre desdites première (MM1) et seconde (MM2) machines motrices électriques.

10. Véhicule (V) terrestre et comprenant des première (MM1) et seconde (MM2) machines motrices électriques propres à délivrer respectivement des premier et second couples moteurs pour entraîner en rotation des roues motrices appartenant respectivement à des premier (T1) et second (T2) trains de roues motrices, **caractérisé en ce qu'**il comprend en outre un dispositif de surveillance (DS) selon la revendication 9.
